# EUROPEAN PATENT SPECIFICATION

(11) **EP 2 532 141 B1**
(45) Date of publication and mention of the grant of the patent: **03.02.2016**
(21) Application number: 11711690.5
(22) Date of filing: 03.02.2011
(51) Int. Cl.: H04L 29/06, H04L 29/08

(54) **SYSTEMS AND METHODS FOR COORDINATING DATA COMMUNICATION BETWEEN TWO DEVICES**
SYSTEME UND VERFAHREN ZUR KOORDINIERUNG EINER DATENKOMMUNIKATION ZWISCHEN ZWEI GERÄTEN
SYSTÈMES ET PROCÉDÉS POUR COORDONNER UNE COMMUNICATION DE DONNÉES ENTRE DEUX DISPOSITIFS

(30) Priority: 03.02.2010 US 699280
(43) Date of publication of application: 12.12.2012
(73) Proprietor: Sling Media PVT Ltd, 560017 Bangalore (IN)
(72) Inventor: JAIN, Vikal Kumar, Bangalore 560 035 (IN)
(74) Representative: Sadler, Peter Frederick
(86) International application number: PCT/IN2011/000080
(87) International publication number: WO 2011/095993

(56) References cited:
- EP-A1- 1 924 046
- EP-A1- 2 173 115
- EP-A2- 1 041 793
- WO-A1-2011/011455
- WO-A2-2006/048758
- DE-A1- 10 234 920
- US-A1- 2007 174 478

## Description

### TECHNICAL FIELD

Embodiments of the subject matter described herein relate generally to data communication systems and techniques. More particularly, embodiments of the subject matter relate to the coordination of data communication between two devices, using a mediation device or centralized server.

### BACKGROUND

A vast number of systems, computer devices, consumer products, electronic devices, and other components rely upon data communication for day-to-day operation. For example, data is often shared among computers in many various forms. One popular form that facilitates information sharing is known as the client-server model, which is commonly realized as a client-server network. In a client-server network, a server application or device fulfills requests from any number of client applications or devices. Servers often manage the storage of vast amounts of data, to which one or many client applications have access. As another example, modern wireless devices (e.g., a laptop computer, a cellular telephone, a handheld video game device, or a digital media player) support wireless data communication with other wireless devices, desktop computers, wireless local area network (WLAN) infrastructure components, and the like. Fundamentally, any form of data communication between two devices can only take place if the two devices are compatible with each other. In other words, both devices must support a common data communication scheme to successfully carry out data communication.

In many systems, it is possible to update, upgrade, modify, or replace a server device without the knowledge of the client device (and without the knowledge of the user of the client device). In such a scenario, the updated or replaced server device may, but need not always, remain fully compatible with the client device. Indeed, one or more data communication protocols that were previously supported by the server device may no longer be supported after an update. When this happens, the client device may waste time trying to establish a data communication session with the server device using an obsolete or no longer supported data communication protocol. In a worst case scenario, it may be impossible for the client device to establish a working data communication link with an updated, modified, or revised server device.

EP 1041793 A2 describes a network based fax system which allows the fax sending device to obtain capability information from one or more servers. EP 1924046 A1 describes a system for synchronising data between a client device and a server device. A device information server is used to store device information of the client and server components such that the client and server components are not required to send to device information to each other. DE 10234920 A1 describes a method for notifying network users of changes in properties of other network units via the network. Details relating to network unit properties are stored in a server database so that an interrogating network unit can send a request message to the server for details of another network unit's properties.

### BRIEF SUMMARY

The invention is defined in the independent claims to which reference is now directed. Preferred features are set out in the dependent claims.

An exemplary embodiment of a method for coordinating data communication between a digital media player (DMP) and a digital media place-shifting device (DMPSD) is provided. The method maintains, at a mediation server device, compatibility information related to data communication capabilities of a plurality of devices, where the plurality of devices include the DMPSD. The method continues by receiving, at the mediation server device, a request for compatibility information of the DMPSD, the request originating from the DMP. In response to receiving the request, the mediation server device sends the compatibility information of the DMPSD to the DMP. The DMP receives the compatibility information and is configured in accordance with said received compatibility. Thereafter a data communication link is established between the DMP and the DMPSD, the operating characteristics of the communication link being determined by the compatibility information. Thereafter, digital media content is place shifted from the DMPSD to the DMP using the established data communication link and the compatibility information.

Also provided is an exemplary embodiment of a mediation server and digital media player.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic representation of an exemplary embodiment of a data communication system that utilizes a centralized mediation server device;
FIG. 2 is a schematic representation of an exemplary embodiment of a centralized mediation server device;
FIG. 3 is a schematic representation of an exemplary embodiment of a device that is capable of performing data communication with another device;
FIG. 4 is a schematic representation of an exemplary embodiment of a media presentation system;
FIG. 5 is a flow chart that illustrates an exemplary embodiment of a data communication coordination process; and
FIG. 6 is a flow chart that illustrates an exemplary embodiment of an updating process.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "processor-readable medium" or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

In a client-server paradigm, data communication is typically initiated by the client device, and both devices use a predefined data communication protocol to communicate with each other. In certain implementations, the client device and/or the server device experience configuration, hardware, software, or firmware changes independently of one another. In such situations, however, the client device and the server device should remain backward compatible with each other to ensure successful data communication sessions after any changes are made. Thus, drastic changes with respect to data communication protocols are usually avoided unless backward compatibility can be preserved.

In accordance with the exemplary embodiments presented here, a centralized device can be used to manage data communication between a client device and a server device. In certain embodiments, the server device provides to the centralized device information about its version, supported protocols, configuration, and compatibility as the server device experiences any relevant changes, updates, or modifications. The client device can then poll the centralized device to obtain the compatibility and/or configuration information of the server device before the client device attempts to communicate data with the server device. This scheme enables the client device to gain knowledge of the data communication protocols and communication modes currently supported by the server device, along with other configuration and compatibility information of the server device, if needed. Moreover, if multiple data communication protocols are supported by the server device, the centralized device can provide a list of the currently supported protocols to the client device. In certain implementations, the list provided by the centralized device can be prioritized or otherwise sorted in a desired manner.

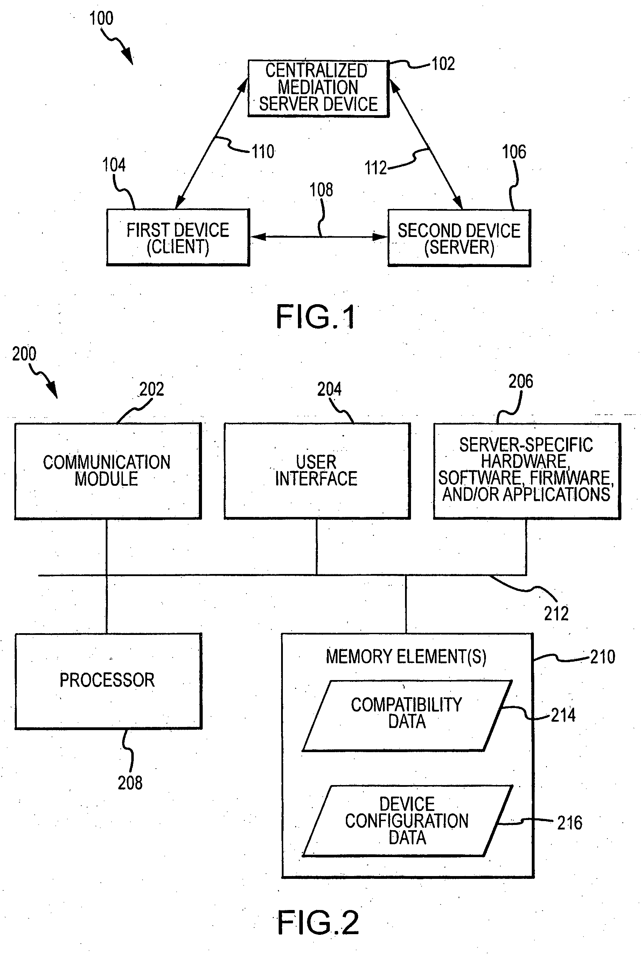

Referring now to the drawings, FIG. 1 is a schematic representation of an exemplary embodiment of a data communication system 100 that utilizes a centralized mediation server device 102 to coordinate data communication between a first device 104 and a second device 106. For purposes of this example, the first device 104 may be considered to be a client device, and the second device 106 may be considered to be a server device, where the two devices cooperate in a client-server arrangement. The first device 104 is communicatively and/or physically coupled to the second device 106 using at least one data communication link 108 that facilitates data communication between the first device 104 and the second device 106 (from the first device 104 to the second device 106 only, from the second device 106 to the first device 104 only, or bi-directionally). Similarly, the centralized mediation server device 102 is communicatively and/or physically coupled to the first device 104 using at least one data communication link 110 that facilitates data communication between the centralized mediation server device 102 and the first device 104. Likewise, the centralized mediation server device 102 is communicatively and/or physically coupled to the second device 106 using at least one data communication link 112 that facilitates data communication between the centralized mediation server device 102 and the second device 106.

A data communication link depicted in FIG. 1 may represent a single direct link between two devices or a plurality of links that cooperate with one another to establish the desired path between two devices. Moreover, a data communication link depicted in FIG. 1 may be established using one or more data communication networks, as is well understood. For example, the system 100 may cooperate with a suitable data communication network such as, without limitation: a local area network (LAN); a wireless local area network (WLAN); a wide area network (WAN) such as the Internet; a telecommunication services network (wireless or traditional); a personal area network (PAN); a cable or satellite television services network; or the like. Furthermore, a data communication link depicted in FIG. 1 could employ wireless data communication techniques and technologies, tangible (wired, cabled, optical, etc.) data communication techniques and technologies, or a combination of both.

The first device 104 and the second device 106 may be realized in any number of different ways, and they may be suitably configured as needed to perform any number of desired functions. In this regard, FIG. 1 depicts a generic implementation where the first device 104 and the second device 106 support data communication between each other. In practice, the first device 104 and/or the second device 106 may be implemented as any of the following, without limitation: a computing device; a data server; a video game device; a telephone device (wireless or traditional); a WLAN infrastructure device (such as an access point); an electronic medical device; a household or other electronic appliance; a digital media player device; a digital media place-shifting device; a television set; stereo or other entertainment equipment; an alarm clock; or the like. These examples are not intended to limit or otherwise restrict the scope of the embodiments described herein.

The centralized mediation server device 102 may also be realized in any number of different ways, and it may be suitably configured to perform a variety of functions, including particular functions related to the coordination of data communication between the first device 104 and the second device 106. The centralized mediation server device 102 could be realized as one or more pieces of hardware that are devoted to the features and functionality described in more detail below. Alternatively, the functionality of the centralized mediation server device 102 could be incorporated into one or more of the device/system types mentioned above for the first device 104 and the second device 106.

As described in more detail below, the centralized mediation server device 102 is suitably configured to manage, coordinate, and facilitate data communication between the first device 104 and the second device 106. In certain embodiments, the centralized mediation server device 102 maintains and stores information about the second device 106, and provides that information to the first device 104 as needed to enable the first device 104 to establish a data communication session with the second device 106. More specifically, the centralized mediation server device 102 maintains compatibility information, configuration data, data communication capabilities information, and/or other information corresponding to the second device 106. This information indicates or describes the techniques, technologies, protocols, modes, and/or schemes supported by the second device 106 for purposes of data communication with another device. Thus, the second device 106 is responsible for keeping the centralized mediation server device 102 updated, such that the centralized mediation server device 102 is provided with current and updated information for the second device 106 (and other devices if necessary). This enables the first device 104 to perform data communication with the second device 106 in a compatible manner regardless of how often the second device 106 might be updated, modified, changed, or upgraded.

FIG. 2 is a schematic representation of an exemplary embodiment of a centralized mediation server device 200, which may be deployed in a data communication system such as the system 100. The centralized meditation server device 200 may be suitably configured to support the particular application and system architecture. For example, the centralized mediation server device 200 could be realized using any conventional computer platform with the appropriate hardware, software, firmware, etc. For the illustrated embodiment, the centralized mediation server device 200 includes, without limitation: a communication module 202; a user interface 204; server-specific hardware, software, firmware, and/or applications 206; at least one processor 208; and at least one memory element 210 having a suitable amount of storage capacity. An implementation of the centralized mediation server device 200 may include additional functional elements and components that are suitably configured to support traditional or well known features, which will not be described in detail here. The elements of the centralized mediation server device 200 may be coupled together via a bus 212 or any suitable interconnection architecture.

The centralized mediation server device 200 employs at least one communication module 202, which may be suitably configured to support wireless data communication and/or non-wireless (wired or cabled) data communication with other devices. Thus, the communication module 202 may be suitably configured to support bidirectional wireless/wired data communication between the centralized mediation server device 200 and other devices in the system.

In certain embodiments, the communication module 202 is configured to support one or more wireless data communication protocols. Any number of suitable wireless data communication protocols, techniques, or methodologies may be supported by the centralized mediation server device 200, including, without limitation: RF; IrDA (infrared); BLUETOOTH®; ZigBee (and other variants of the IEEE 802.15.4 protocol); IEEE 802.11 (any variation); IEEE 802.16 (WiMAX or any other variation); Direct Sequence Spread Spectrum; Frequency Hopping Spread Spectrum; wireless telecommunication protocols; wireless home network communication protocols; paging network protocols; magnetic induction; satellite data communication protocols; wireless hospital or health care facility network protocols such as those operating in the WMTS bands; GPRS; and proprietary wireless data communication protocols such as variants of Wireless USB. In an embodiment of the centralized mediation server device 200, a wireless data communication module may include or be realized as hardware, software, and/or firmware, such as an RF front end, a suitably configured radio module (which may be a stand alone module or integrated with other or all functions of the device), a wireless transmitter, a wireless receiver, a wireless transceiver, an infrared sensor, an infrared diode and sensor, an electromagnetic transducer, or the like. Moreover, the centralized mediation server device 200 may include one or more antenna arrangements that cooperate with the communication module 202.

In some embodiments, the communication module 202 supports data transfer over a cable, a wired connection, or other physical link. In this regard, the communication module 202 could be adapted to support one or more wired/cabled data communication protocols. Any number of suitable data communication protocols, techniques, or methodologies may be supported by the centralized mediation server device 200, including, without limitation: Ethernet; home network communication protocols; USB; IEEE 1394 (Firewire); hospital network communication protocols; and proprietary data communication protocols. In an embodiment of the centralized mediation server device 200, a wired data communication module may include or be realized as hardware, software, and/or firmware, such as a suitably configured and formatted port, connector, jack, plug, receptacle, socket, adaptor, or the like.

Although not required, some embodiments of the centralized mediation server device 200 may include the user interface 204. If deployed, the user interface 204 could include any number of user interface features that allow a user to control the operation of the centralized mediation server device 200 and/or other devices within the system. In this regard, the user interface 204 may include a keypad, keys, buttons, switches, knobs, a touchpad, a joystick, a pointing device, a virtual writing tablet, a display element, a speaker or other audio transducer, indicator lights, or any device, component, or function that enables the user to select options, input information, obtain audio information, obtain visual information, or otherwise interact with the centralized mediation server device 200 and/or other devices within the system.

The server-specific hardware, software, firmware, and/or applications 206 may vary from one embodiment of the centralized mediation server device 200 to another. For example, one embodiment of the centralized mediation server device 200 may support little (if any) features or functions other than those related to the data communication coordination and facilitation operations described here. On the other hand, another embodiment of the centralized mediation server device 200 might be deployed such that it supports additional features and functions that may be unrelated to the data communication coordination and facilitation methodologies described here. Accordingly, the server-specific hardware, software, firmware, and/or applications 206 will support the desired functions, operations, and processing requirements of the particular implementation of the centralized mediation server device 200. In practice, certain portions or aspects of the server-specific hardware, software, firmware, and/or applications 206 may be implemented in one or more of the other blocks depicted in FIG. 2.

The processor 208 may be implemented or performed with a general purpose processor, a content addressable memory, a digital signal processor, an application specific integrated circuit, a field programmable gate array, any suitable programmable logic device, discrete gate or transistor logic, discrete hardware components, or any combination designed to perform the functions described here. The processor 208 may be realized as a microprocessor, a controller, a microcontroller, or a state machine. Moreover, the processor 208 may be implemented as a combination of computing devices, e.g., a combination of a digital signal processor and a microprocessor, a plurality of microprocessors, one or more microprocessors in conjunction with a digital signal processor core, or any other such configuration. The processor 208 cooperates with other elements of the centralized mediation server device 200 to perform, execute, and manage the various functions, operations, processes, and techniques described herein.

The memory element 210 may be realized as RAM memory, flash memory, EPROM memory, EEPROM memory, registers, a hard disk, a removable disk, a CD-ROM, or any other form of storage medium known in the art. In this regard, the memory element 210 can be coupled to the processor 208 to enable the processor 208 to read information from, and write information to, the memory element 210. In the alternative, the memory element 210 may be integral to the processor 208. As an example, the processor 208 and the memory element 210 may reside in an ASIC. In certain embodiments, the memory element 210 is utilized to store and maintain compatibility information or data 214 and/or device configuration information or data 216 that is related to certain data communication capabilities, characteristics, parameters, and other factors associated with a plurality of devices. In this regard, the memory element 210 might store and maintain a list or a table of information having entries for each device under the management of the centralized mediation server device 200. Referring to FIG. 1 as an example, the memory element 210 will store and maintain the current compatibility/configuration data for at least the second device 106.

The compatibility data and/or the device configuration data for a given device can be used to determine the manner(s) in which that given device can carry out data communication with another device. In this regard, the compatibility/configuration information maintained by the centralized mediation server device 200 for a given device may include, without limitation: hardware version information of the device; software version information of the device; firmware version information of the device; data communication protocols supported by the device; data communication modes supported by the device; wireless data communication channels supported by the device; wireless data communication frequencies supported by the device; authentication techniques mandated by the device; security or encryption techniques supported by the device; or the like. In some embodiments, the compatibility/configuration information of a given device identifies a plurality of different data communication protocols or modes that are supported by that device, and the compatibility/configuration information prioritizes the different data communication protocols in accordance with a chosen prioritization scheme. For example, it may be desirable for a client device to initially attempt communication with a server device using a preferred data communication protocol. Thereafter, if the initial attempt fails, the client device can attempt communication with the server device using a different data communication protocol. For this example, the compatibility/configuration data could include a ranking or ordered listing of the different supported data communication protocols, with the preferred data communication protocol listed first.

Depending upon the particular embodiments and the specific configuration of the devices, the compatibility/configuration information may indicate some features or items that are mandatory and required, and indicate other features or items that are merely optional, suggested, or preferred. Thus, the relative importance or criticality of the compatibility/configuration information for a given device might vary depending upon the nature and purpose of the information. In practice, a first device may have some discretion and freedom to determine how best to perform data communication with a second device, after considering the compatibility/configuration information of the second device.

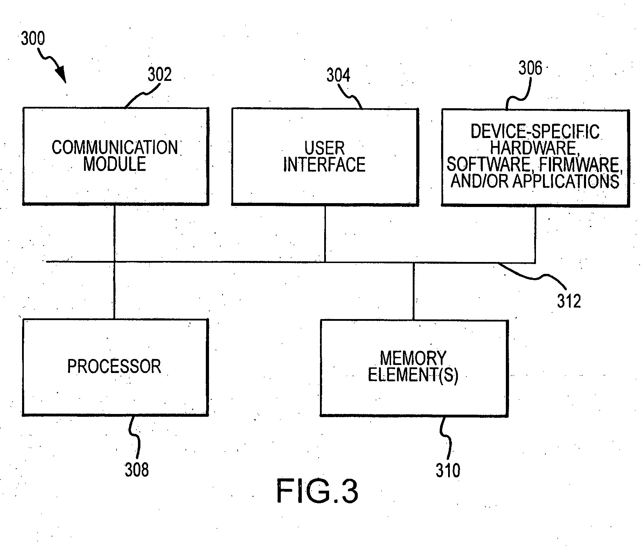

FIG. 3 is a schematic representation of an exemplary embodiment of a device 300 that is capable of performing data communication with another device. Referring to FIG. 1, the general configuration of the device 300 may be used for the first device 104, the second device 106, or both. The device 300 may be suitably configured to support the particular application and system architecture. Moreover, the device 300 could be realized using any suitable platform with the appropriate hardware, software, firmware, etc. For the illustrated embodiment, the device 300 includes, without limitation: a communication module 302; a user interface 304; device-specific hardware, software, firmware, and/or applications 306; at least one processor 308; and at least one memory element 310 having a suitable amount of storage capacity. An implementation of the device 300 may include additional functional elements and components that are suitably configured to support traditional or well known features, which will not be described in detail here. The elements of the device 300 may be coupled together via a bus 312 or any suitable interconnection architecture.

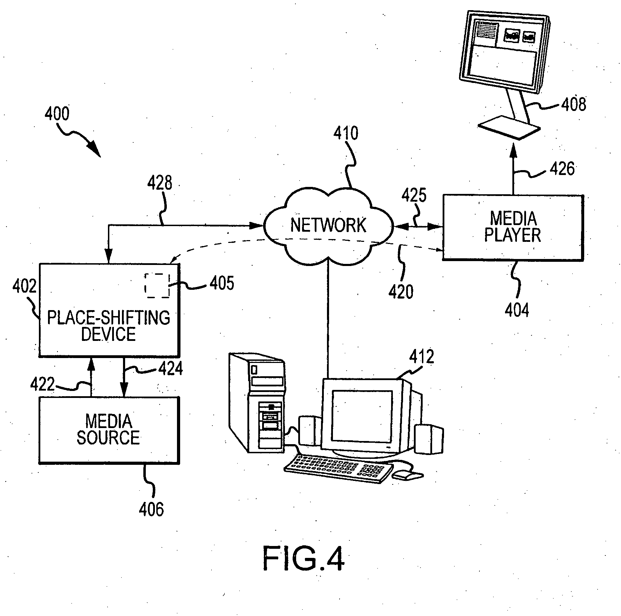

The communication module 302 and the user interface 304 may be configured as described above for their counterpart elements in the centralized mediation server device 200. Accordingly, the communication module 302 and the user interface 304 will not be redundantly described in detail here. The device-specific hardware, software, firmware, and/or applications 306 may vary from one embodiment of the device 300 to another. For example, if the device 300 is realized as a digital media player device, then the device-specific hardware, software, firmware and/or applications 306 will be designed and implemented to support the various features, functions, and processes that are normally associated with the operation of a digital media player device. As another example, if the device 300 is realized as a digital media place-shifting device (described in more detail below with reference to FIG. 4), then the device-specific hardware, software, firmware and/or applications 306 will be designed and implemented to support the various features, functions, and processes that are normally associated with the operation of a digital media place-shifting device. Thus, the particular feature set and operating capabilities of the device 300 will be influenced by the device-specific hardware, software, firmware, and/or applications 306. In practice, certain portions or aspects of the device-specific hardware, software, firmware, and/or applications 306 may be implemented in one or more of the other blocks depicted in FIG. 3.

The processor 308 and the memory element 310 may be configured as described above for their counterpart elements in the centralized mediation server device 200. Accordingly, the processor 308 and the memory element 310 will not be redundantly described in detail here. In practice, the processor 308 and the memory element 310 will be configured to perform, execute, and manage the various functions, operations, processes, and techniques described herein. For example, the processor 308 and the memory element 310 could be utilized to provide the data communication compatibility data and/or the device configuration data of the device 300 to the centralized mediation server device. As another example, the processor 308 and the memory element 310 could be used to support compatible data communication between the device 300 and another device.

As mentioned previously with reference to FIG. 1, the first device 104 and the second device 106 can be realized using a variety of different platforms to support the functionality of the desired system architecture. In this regard, FIG. 4 is a schematic representation of an exemplary embodiment of a media presentation system 400, which is generally arranged in accordance with the system 100 depicted in FIG. 1. The media presentation system 400 can be utilized to carry out place-shifting of digital media content. This particular embodiment of the system 400 includes a digital media processing device (e.g., a digital media place-shifting device 402) that receives media content 422 from a media source 406, encodes the received content into a streaming format, and then transmits the encoded media stream 420 to a remotely-located digital media player (or other presentation device) 404 over a network 410. The digital media player 404 receives the encoded media stream 420, decodes the stream, and presents the decoded content to a viewer on a television or other display 408. Although not depicted in FIG. 4, the digital media player 404 includes or cooperates with at least one speaker, audio transducer, or other sound-generating element that supports the presentation of the audio portion of media streams. In various embodiments, a centralized mediation server device 412 (configured as described herein) may also be provided to communicate with the place-shifting device 402 and/or the digital media player 404 via the network 410 to assist these devices in locating each other, maintaining security, providing or receiving content or information, and/or any other features as desired. For this example, the digital media player 404 corresponds to the first device 104 (a client device) in FIG. 1, and the place-shifting device 402 corresponds to the second device 106 (a server device) in FIG. 1.

The place-shifting device 402 is any component, hardware, software logic and/or the like capable of transmitting a packetized stream of media content over the network 410. In various embodiments, the place-shifting device 402 incorporates suitable encoder and/or transcoder (collectively "encoder") logic to convert audio/video or other media content 422 into a packetized format that can be transmitted over the network 410. The media content 422 may be received in any format, and may be received from any internal or external media source 406 such as any sort of broadcast, cable or satellite television programming source, a "video-on-demand" or similar source, a digital video disk (DVD) or other removable media, a video camera, and/or the like. The place-shifting device 402 encodes the media content 422 to create the encoded media stream 420 in any manner. In various embodiments, the place-shifting device 402 contains a transmit buffer 405 that temporarily stores encoded data prior to transmission on the network 410.

In practice, an embodiment of the place-shifting device 402 may be implemented using any of the various SLINGBOX products available from Sling Media of Foster City, California, although other products could be used in other embodiments. Certain embodiments of the place-shifting device 402 are generally capable of receiving the media content 422 from an external media source 406 such as any sort of digital video recorder (DVR), set top box (STB), cable or satellite programming source, DVD player, and/or the like. In such embodiments, the place-shifting device 402 may additionally provide commands 424 to the media source 406 to produce the desired media content 422. Such commands 424 may be provided over any sort of wired or wireless interface, such as an infrared or other wireless transmitter that emulates remote control commands receivable by the media source 406. Other embodiments, however, may modify or omit this feature entirely.

In other embodiments, the place-shifting device 402 may be integrated with any sort of content-receiving or other capabilities typically affiliated with the media source 406. The place-shifting device 402 may be a hybrid STB or other receiver, for example, that also provides transcoding and place-shifting features. Such a device may receive satellite, cable, broadcast and/or other signals that encode television programming or other content received from an antenna, modem, server and/or other source. A receiver of the place-shifting device 402 may further demodulate or otherwise decode the received signals to extract programming that can be locally viewed and/or place-shifted to the remotely-located digital media player 404 as appropriate. In this regard, the place-shifting device 402 may also include a content database stored on a hard disk drive, memory, or other storage medium to support a personal or digital video recorder (DVR) feature or other content library as appropriate. Hence, in some embodiments, the media source 406 and the place-shifting device 402 may be physically and/or logically contained within a common component, housing or chassis.

In still other embodiments, the place-shifting device 402 includes or is implemented as a software program, applet, or the like executing on a conventional computing system (e.g., a personal computer). In such embodiments, the place-shifting device 402 may encode, for example, some or all of a screen display typically provided to a user of the computing system for place-shifting to a remote location. One device capable of providing such functionality is the SlingProjector product available from Sling Media of Foster City, California, which executes on a conventional personal computer, although other products could be used as well.

The digital media player 404 is any device, component, module, hardware, software and/or the like capable of receiving the encoded media stream 420 from one or more place-shifting devices 402. In various embodiments, the digital media player 404 is personal computer (e.g., a "laptop" or similarly portable computer, although desktop-type computers could also be used), a mobile phone, a personal digital assistant, a personal media player, or the like. In many embodiments, the digital media player 404 is a general purpose computing device that includes a media player application in software or firmware that is capable of securely connecting to the place-shifting device 402, and is capable of receiving and presenting media content to the user of the device as appropriate. In other embodiments, however, the digital media player 404 is a standalone or other separate hardware device capable of receiving the encoded media stream 420 via any portion of the network 410 and decoding the encoded media stream 420 to provide an output signal 426 that is presented on the display 408. One example of a standalone digital media player 404 is the SLINGCATCHER product available from Sling Media of Foster City, California, although other products could be equivalently used.

The network 410 is any digital or other communications network capable of transmitting messages between senders (e.g., the place-shifting device 402) and receivers (e.g., the digital media player 404). In various embodiments, the network 410 includes any number of public or private data connections, links or networks supporting any number of communications protocols. The network 410 may include the Internet, for example, or any other network based upon TCP/IP or other conventional protocols. In various embodiments, the network 410 also incorporates a wireless and/or wired telephone network, such as a cellular communications network for communicating with mobile phones, personal digital assistants, and/or the like. The network 410 may also incorporate any sort of wireless or wired local area networks, such as one or more IEEE 802.3 and/or IEEE 802.11 networks.

The place-shifting device 402 and/or the digital media player 404 are therefore able to communicate in any manner with the network 410 (e.g., using any sort of data communication links 428 and/or 425, respectively). Such data communication may take place over a wide area link that includes the Internet and/or a telephone network, for example; in other embodiments, communications between the place-shifting device 402 and the digital media player 404 may take place over one or more wired or wireless local area links that are conceptually incorporated within the network 410. In various equivalent embodiments, the place-shifting device 402 and the digital media player 404 may be directly connected via any sort of cable (e.g., an Ethernet cable or the like) with little or no other network functionality provided.

Many different place-shifting scenarios could be formulated based upon available computing and communications resources, consumer demand and/or any other factors. In various embodiments, consumers may wish to place-shift content within a home, office or other structure, such as from the place-shifting device 402 to a desktop or portable computer located in another room. In such embodiments, the content stream will typically be provided over a wired or wireless local area network operating within the structure. In other embodiments, consumers may wish to place-shift content over a broadband or similar network connection from a primary location to a computer or other remote digital media player 404 located in a second home, office, hotel or other remote location. In still other embodiments, consumers may wish to place-shift content to a mobile phone, personal digital assistant, media player, video game player, automotive or other vehicle media player, and/or other device via a mobile link (e.g., a GSM/EDGE or CDMA/EVDO connection, any sort of 3G or subsequent telephone link, an IEEE 802.11 "Wi-Fi" link, and/or the like). Several examples of place-shifting applications available for various platforms are provided by Sling Media of Foster City, California, although the concepts described herein could be used in conjunction with products and services available from any source.

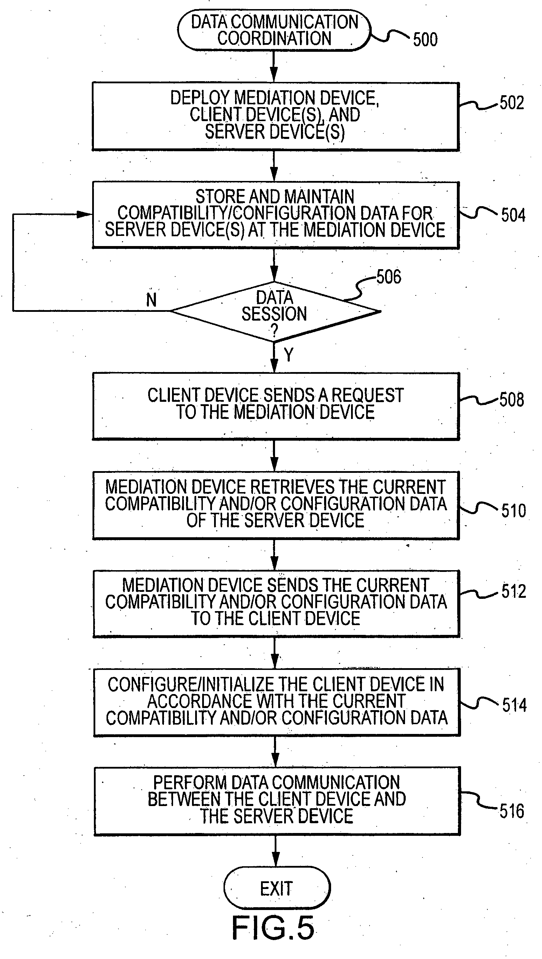

As mentioned previously, a centralized mediation server device can be employed to coordinate and facilitate data communication between two devices, e.g., a client device and a server device, a digital media place-shifting device and a digital media player device, or the like. In this regard, FIG. 5 is a flow chart that illustrates an exemplary embodiment of a data communication coordination process 500 that could be performed by an appropriately configured data communication system (such as the system 100 or the system 400). The various tasks performed in connection with process 500 may be performed by software, hardware, firmware, or any combination thereof. For illustrative purposes, the following description of process 500 may refer to elements mentioned above in connection with FIGS. 1-4. In practice, portions of process 500 may be performed by different elements of the described system, e.g., the centralized mediation server device, the client device, or the server device. It should be appreciated that process 500 may include any number of additional or alternative tasks, the tasks shown in FIG. 5 need not be performed in the illustrated order, and process 500 may be incorporated into a more comprehensive procedure or process having additional functionality not described in detail herein. Moreover, one or more of the tasks shown in FIG. 5 could be omitted from an embodiment of the process 500 as long as the intended overall functionality remains intact.

The data communication process 500 assumes that the appropriate system components have been deployed (task 502). In other words, a centralized mediation server device, at least one client device, and at least one server device have been deployed. As explained above, one feature of the deployed system is to accommodate and support data communication between a client device and a server device. To this end, certain embodiments of the system will maintain persistent data communication links between the centralized mediation device and the client devices. In addition, persistent data communication links can be maintained between the centralized mediation device and the server devices. The purpose of these data communication links is described in detail below.

The centralized mediation device stores and maintains compatibility information and/or device configuration data for one or more server devices (task 504). In certain embodiments, the centralized mediation device also stores and maintains compatibility information and/or device configuration data for one or more client devices. As mentioned above, the compatibility information is related to the data communication capabilities of the respective server devices. Similarly, the device configuration data may be indicative of data communication parameters (e.g., protocols, security techniques, modulation schemes, or the like) that are supported by the respective server devices. Notably, the compatibility/configuration information is preferably maintained by the centralized mediation device in an ongoing and dynamic manner such that the compatibility/configuration information is kept current.

This embodiment of the process 500 idles until the client device needs to initiate a data communication session with the server device. In this regard, a query task 506 may be used to check whether a data communication session is to be established. If so, the client device will send a request for compatibility/configuration data to the centralized mediation device (task 508). The request identifies the server device with which the client device intends to communicate, and the request calls for the compatibility information and/or the device configuration data of the identified server device. For this particular example, the request is sent using the persistent data communication link that is present between the client device and the centralized mediation device.

This description assumes that the centralized mediation device successfully receives the request that originated from the client device. For this particular example, the request is received using the persistent data communication link between the client device and the centralized mediation device. After receiving and processing the request, the centralized mediation device retrieves or accesses the current compatibility information and/or the current device configuration data for the identified server device (task 510). In practice, the processor of the centralized mediation device could be used to retrieve the necessary information from the memory element(s) of the centralized mediation device. Thereafter, the process 500 sends the current compatibility information and/or the current device configuration data of the designated server device (task 512). This current information is sent by the centralized mediation device, and the client device that originated the request is identified as the recipient or destination device. In this regard, the centralized mediation device sends the compatibility information and/or the device configuration data to the requesting client device. For this particular example, the current information of the designated server device is sent using the persistent data communication link that is present between the client device and the centralized mediation device.

This-description assumes that the client device successfully receives the compatibility/configuration information from the centralized mediation device. For this particular example, the compatibility/configuration information is received using the persistent data communication link that has been established between the client device and the centralized mediation device. After receiving the compatibility/configuration information, the client device is configured, updated, initialized, or otherwise prepared in accordance with the received compatibility/configuration data (task 514). Task 514 may be associated with the changing of settings, the selection of one of a plurality of available data communication protocols, the selection of one of a plurality of supported data communication modes, the modification of certain data communication characteristics, parameters, factors, or technologies that influence the manner in which the client device initiates or maintains data communication with the server device, or the like. It should be appreciated that task 514 need not always be performed. For instance, if the received compatibility/configuration information has already been processed and implemented by the client device, then task 514 may be skipped.

After the client device has been configured or initialized with the current compatibility/configuration information, the process 500 can proceed by performing data communication between the client device and the server device (task 516). Notably, this data communication is performed in a manner that uses the current compatibility information and/or the current device configuration data of the server device, or in a manner that is otherwise influenced by the current compatibility/configuration information. In practice, the process 500 may need to establish a suitable data communication link (which may be wireless, tangible, or a combination thereof) between the client device and the server device before performing the data communication. In this regard, certain operating characteristics of this data communication link might be dictated by, determined by, or influenced by the current compatibility information and/or the current device configuration data of the server device. As one example, the data communication between the client and server devices can be performed using a data communication protocol that is specified by the current compatibility/configuration information. For the exemplary embodiment depicted in FIG. 4, task 516 is associated with the transmission of streaming media from the digital media place-shifting device 402 to the digital media player 404.

After the centralized mediation device and the communicating devices have been initially deployed in the system, the portion of the process beginning at task 504 can be repeated whenever a new data session is initiated. Thus, the client device will poll or interrogate the centralized mediation device before it attempts to establish a new data communication session with a server device. This preliminary check enables the client device to remain updated and current with any changes, revisions, or updates made to the server device. Accordingly, the process 500 can be used to preserve, enhance, or maximize compatibility between client devices and server devices.

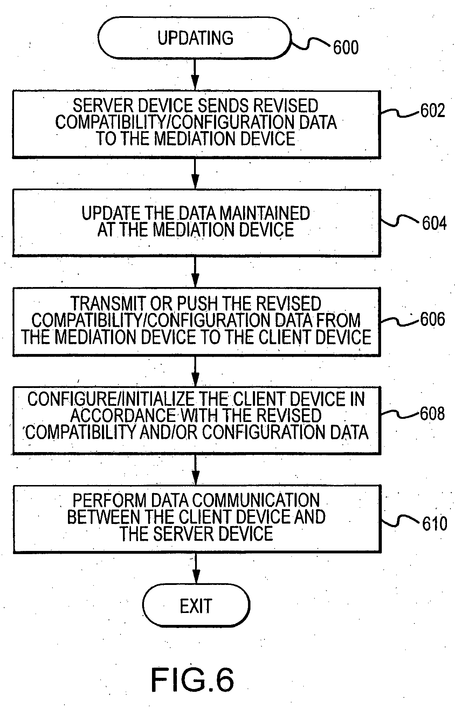

In preferred implementations, the centralized mediation device is kept updated to reflect any changes to the servers under its supervision. This enables the centralized mediation server to deliver (to the client devices) the current compatibility information and the current device configuration data of the respective server devices. In this regard, FIG. 6 is a flow chart that illustrates an exemplary embodiment of an updating process 600 that could be performed by an appropriately configured data communication system (such as the system 100 or the system 400). The various tasks performed in connection with process 600 may be performed by software, hardware, firmware, or any combination thereof. For illustrative purposes, the following description of process 600 may refer to elements mentioned above in connection with FIGS. 1-4. In practice, portions of process 600 may be performed by different elements of the described system, e.g., the centralized mediation device, a client device, or a server device. It should be appreciated that process 600 may include any number of additional or alternative tasks, the tasks shown in FIG. 6 need not be performed in the illustrated order, and process 600 may be incorporated into a more comprehensive procedure or process having additional functionality not described in detail herein. Moreover, one or more of the tasks shown in FIG. 6 could be omitted from an embodiment of the process 600 as long as the intended overall functionality remains intact.

The updating process 600 may be performed whenever a server device is updated, revised, or modified in a manner that affects its data communication properties, characteristics, or functionality. Accordingly, the process 600 may begin with a server device sending its revised compatibility information and/or its revised device configuration data to the centralized mediation device (task 602). For this particular example, the revised compatibility/configuration information is sent using the persistent data communication link that is present between the server device and the centralized mediation device. This description assumes that the centralized mediation device successfully receives the revised compatibility/configuration data from the server device. For this particular example, the revised compatibility/configuration information is received using the persistent data communication link that has been established between the server device and the centralized mediation device. The centralized mediation device updates its existing compatibility/configuration data with the revised compatibility information and/or the revised device configuration data (task 604).

In certain embodiments, the centralized mediation device will maintain the updated compatibility/configuration data and will transmit the revised compatibility information and/or the revised device configuration data to client devices when requested to do so by the client devices (task 606). For this particular example, the revised compatibility/configuration information is sent to the client device in response to a request generated by the client device, and the information is sent using the persistent data communication link between the centralized mediation device and the client device. As mentioned above with reference to the data communication coordination process 500, a client device can send requests for the compatibility/configuration information when needed. Alternatively, it may be desirable to push the revised compatibility information and/or the revised device configuration data from the centralized mediation device to one or more client devices. In this context, the revised information can be automatically pushed to client devices under the control of the centralized mediation server, and without any request or other prompting by the client devices.

This description assumes that the client devices successfully receive the revised compatibility/configuration data from the centralized mediation device. For this particular example, the revised compatibility/configuration information is received by the client device using the persistent data communication link between the centralized mediation device and the client device. Thereafter, the client device can be configured or initialized with the revised compatibility/configuration data (task 608), and the process 600 can perform data communication between the client device and the server device, using the revised compatibility/configuration data (task 610). Tasks 608 and 610 are similar to their counterpart tasks 514 and 516, which were described in detail above. In contrast to task 516, however, task 610 performs data communication in a manner that uses the revised compatibility information and/or the revised device configuration data of the server device, or in a manner that is otherwise influenced by the revised compatibility/configuration information.

It should be appreciated that the updating process 600 can be performed in concert with the data communication coordination process 500 in a manner that enables the centralized mediation server to obtain updates from a first server device while processing (e.g., sending) current compatibility/configuration information of a second server device. Moreover, these processes can be performed in an ongoing manner that refreshes the centralized mediation server whenever any server device in the system is revised, updated, upgraded, replaced, or otherwise changed.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

## Claims

1. A method for coordinating data communication between a digital media player device (404) and a digital media place-shifting device (402) that place shifts digital media content by receiving audio-video content in a first format, converting the received audio-video content into an encoded media stream having a packetized format, and transmitting the encoded media stream to the digital media player device, the method comprising:
maintaining (504), at a mediation server device (412), compatibility information related to data communication capabilities of a plurality of devices, the plurality of devices including the digital media place-shifting device;
receiving, at the mediation server device, a request (508) for compatibility information of the digital media place-shifting device, the request originating from the digital media player device;
in response to receiving the request, sending (512) the compatibility information of the digital media place-shifting device from the mediation server device to the digital media player device;
receiving the compatibility information at the digital media player device and configuring (514) the digital media player device in accordance with the received compatibility information;
thereafter, establishing a data communication link between the digital media player device and the digital media place-shifting device, wherein operating characteristics of the data communication link are determined by the compatibility information; and
thereafter, transmitting digital media content (516) from the digital media place-shifting device to the digital media player device using the established data communication link and the compatibility information.

2. The method of claim 1, further comprising:
receiving, at the mediation server device, revised compatibility information of the digital media place-shifting device; and
updating the compatibility information maintained at the mediation server device with the revised compatibility information.

3. The method of claim 2, further comprising transmitting the revised compatibility information from the mediation server device to the digital media player device.

4. The method of claim 3, wherein the mediation server device pushes the revised compatibility information to the digital media player device.

5. The method of claim 1, further comprising maintaining a persistent data communication link between the mediation server device and the digital media player device, wherein the request for compatibility information of the digital media place-shifting device is received using the persistent data communication link, and wherein the compatibility information of the digital media place-shifting device is sent using the persistent data communication link.

6. The method of claim 1, wherein the compatibility information maintained by the mediation server device comprises information selected from the group consisting of:
hardware version information of the digital media place-shifting device; software version information of the digital media place-shifting device; firmware version information of the digital media place-shifting device; data communication protocols supported by the digital media place-shifting device; data communication modes supported by the digital media place-shifting device; wireless data communication channels supported by the digital media place-shifting device; wireless data communication frequencies supported by the digital media place-shifting device; authentication techniques mandated by the digital media place-shifting device; security techniques supported by the digital media place-shifting device; and encryption techniques supported by the digital media place-shifting device.

7. A mediation server (412) configured for use in the method of claim 1, the method being for coordinating data communication between a digital media player device (404) and a digital media place-shifting device (402) that place shifts digital media content by receiving audio-video content in a first format, converting the received audio-video content into an encoded media stream having a packetized format, and transmitting the encoded media stream to the digital media player device, the mediation server being configured to:
maintain (504), retrieve and access compatibility information related to data communication capabilities of a plurality of devices, the plurality of devices including the digital media place-shifting device;
receive a request (508) for compatibility information of the digital media place-shifting device, the request originating from the digital media player device; and
in response to receiving the request, send (512) the compatibility information of the digital media place-shifting device from the mediation server device to the digital media player device.

8. A digital media player device (404) configured for use in the method of claim 1, the method being for coordinating data communication between a digital media player device (404) and a digital media place-shifting device (402) that place shifts digital media content by receiving audio-video content in a first format, converting the received audio-video content into an encoded media stream having a packetized format, and transmitting the encoded media stream to the digital media player, the digital media player device being configured to:
request and receive, from a mediation server according to claim 7, compatibility information of the digital media place-shifting device and configure itself in accordance with the received compatibility information;
thereafter, establish a data communication link with the digital media place-shifting device, wherein operating characteristics of the data communication link are determined by the compatibility information; and
thereafter, receive digital media content (516) from the digital media place-shifting device using the established data communication link and the compatibility information.

## Patentansprüche

1. Verfahren zum Koordinieren von Datenkommunikation zwischen einem digitalen Media-Player-Gerät (404) und einem digitalen Medienverlagerungsgerät (402), das digitalen Medieninhalt durch Empfangen von Audio-Video-Inhalt in einem ersten Format, Umwandeln des empfangenen Audio-Video-Inhalts in einen codierten Medienstrom mit einem paketierten Format und Senden des codierten Medienstroms zu dem digitalen Media-Player-Gerät verlagert, wobei das Verfahren Folgendes beinhaltet:
Führen (504), an einem Mediationsservergerät (412), von Kompatibilitätsinformationen über Datenkommunikationsfähigkeiten mehrerer Geräte, wobei die mehreren Geräte das digitale Medienverlagerungsgerät beinhalten;
Empfangen, an dem Mediationsservergerät, einer Anforderung (508) von Kompatibilitätsinformationen des digitalen Medienverlagerungsgeräts, wobei die Anforderung von dem digitalen Media-Player-Gerät stammt;
Senden (512), als Reaktion auf den Empfang der Anforderung, der Kompatibilitätsinformationen des digitalen Medienverlagerungsgeräts von dem Mediationsservergerät zu dem digitalen Media-Player-Gerät;
Empfangen der Kompatibilitätsinformationen am digitalen Media-Player-Gerät und Konfigurieren (514) des digitalen Media-Player-Geräts gemäß den empfangenen Kompatibilitätsinformationen;
danach Einrichten einer Datenkommunikationsverbindung zwischen dem digitalen Media-Player-Gerät und dem digitalen Medienverlagerungsgerät, wobei Betriebscharakteristiken der Datenkommunikationsverbindung durch die Kompatibilitätsinformationen bestimmt werden; und
danach digitales Senden von Medieninhalt (516) von dem digitalen Medienverlagerungsgerät zu dem digitalen Media-Player-Gerät mit der eingerichteten Datenkommunikationsverbindung und den Kompatibilitätsinformationen.

2. Verfahren nach Anspruch 1, das ferner Folgendes beinhaltet:
Empfangen, an dem Mediationsservergerät, von revidierten Kompatibilitätsinformationen des digitalen Medienverlagerungsgeräts; und
Aktualisieren der an dem Mediationsservergerät geführten Kompatibilitätsinformationen mit den revidierten Kompatibilitätsinformationen.

3. Verfahren nach Anspruch 2, das ferner das Senden der revidierten Kompatibilitätsinformationen von dem Mediationsservergerät zu dem digitalen Media-Player-Gerät beinhaltet.

4. Verfahren nach Anspruch 3, wobei das Mediationsservergerät die revidierten Kompatibilitätsinformationen zum digitalen Media-Player-Gerät pusht.

5. Verfahren nach Anspruch 1, das ferner das Führen einer dauerhaften Datenkommunikationsverbindung zwischen dem Mediationsservergerät und dem digitalen Media-Player-Gerät beinhaltet, wobei die Anforderung von Kompatibilitätsinformationen des digitalen Medienverlagerungsgeräts mit der dauerhaften Datenkommunikationsverbindung empfangen wird und wobei die Kompatibilitätsinformationen des digitalen Medienverlagerungsgeräts mit der dauerhaften Datenkommunikationsverbindung gesendet werden.

6. Verfahren nach Anspruch 1, wobei die vom Mediationsservergerät geführten Kompatibilitätsinformationen Informationen beinhalten, die ausgewählt sind aus der Gruppe bestehend aus: Hardware-Versionsinformationen des digitalen Medienverlagerungsgeräts; Software-Versionsinformationen des digitalen Medienverlagerungsgeräts; Firmware-Versionsinformationen des digitalen Medienverlagerungsgeräts; Datenkommunikationsprotokollen, die von dem digitalen Medienverlagerungsgerät unterstützt werden; Datenkommunikationsmodi, die von dem digitalen Medienverlagerungsgerät unterstützt werden; drahtlosen Datenkommunikationskanälen, die von dem digitalen Medienverlagerungsgerät unterstützt werden; drahtlosen Datenkommunikationsfrequenzen, die von dem digitalen Medienverlagerungsgerät unterstützt werden; Authentifizierungstechniken, die von dem digitalen Medienverlagerungsgerät angewiesen werden; Sicherheitstechniken, die von dem digitalen Medienverlagerungsgerät unterstützt werden; und Verschlüsselungstechniken, die von dem digitalen Medienverlagerungsgerät unterstützt werden.

7. Mediationsserver (412), konfiguriert zur Verwendung bei dem Verfahren nach Anspruch 1, wobei das Verfahren zum Koordinieren von Datenkommunikation zwischen einem digitalen Media-Player-Gerät (404) und einem digitalen Medienverlagerungsgerät (402) dient, das digitalen Medieninhalt durch Empfangen von Audio-Video-Inhalt in einem ersten Format, Umwandeln des empfangenen Audio-Video-Inhalts in einen codierten Medienstrom mit einem paketierten Format und Senden des codierten Medienstroms zu dem digitalen Media-Player-Gerät verlagert, wobei der Mediationsserver konfiguriert ist zum:
Führen (504) von Abruf-und-Zugriff-Kompatibilitätsinformationen über Datenkommunikationsfähigkeiten von mehreren Geräten, wobei die mehreren Geräte das digitale Medienverlagerungsgerät beinhalten;
Empfangen einer Anforderung (508) von Kompatibilitätsinformationen des digitalen Medienverlagerungsgeräts, wobei die Anforderung von dem digitalen Media-Player-Gerät kommt; und
Senden (512), als Reaktion auf den Empfang der Anforderung, der Kompatibilitätsinformationen des digitalen Medienverlagerungsgeräts von dem Mediationsservergerät zu dem digitalen Media-Player-Gerät.

8. Digitales Media-Player-Gerät (404), konfiguriert zur Verwendung in dem Verfahren nach Anspruch 1, wobei das Verfahren zum Koordinieren von Datenkommunikation zwischen einem digitalen Media-Player-Gerät (404) und einem digitalen Medienverlagerungsgerät (402) dient, das digitalen Medieninhalt durch Empfangen von Audio-Video-Inhalt in einem ersten Format, Umwandeln des empfangenen Audio-Video-Inhalts in einen codierten Medienstrom mit einem paketierten Format und Senden des codierten Medienstroms zu dem digitalen Media-Player-Gerät verlagert, wobei das digitale Media-Player-Gerät konfiguriert ist zum:
Anfordern und Empfangen, von einem Mediationsserver nach Anspruch 7, von Kompatibilitätsinformationen des digitalen Medienverlagerungsgeräts, und Selbstkonfigurieren gemäß den empfangenen Kompatibilitätsinformationen;
danach Einrichten einer Datenkommunikationsverbindung mit dem digitalen Medienverlagerungsgerät, wobei Betriebscharakteristiken der Datenkommunikationsverbindung durch die Kompatibilitätsinformationen bestimmt werden; und
danach Empfangen von digitalem Medieninhalt (516) von dem digitalen Medienverlagerungsgerät mit der eingerichteten Datenkommunikationsverbindung und den Kompatibilitätsinformationen.

## Revendications

1. Procédé pour coordonner une communication de données entre un dispositif de lecture de médias numériques (404) et un dispositif de lecture nomade de médias numériques (402) qui déplace un contenu de médias numériques en recevant un contenu audio-vidéo dans un premier format, en convertissant le contenu audio-vidéo reçu en un flux de médias codés ayant un format mis en paquets, et en transmettant le flux de médias codés au dispositif de lecture de médias numériques, le procédé comprenant :
tenir à jour (504), à un dispositif serveur de médiation (412), des informations de compatibilité associées à des capabilités de communication de données d'une pluralité de dispositifs, la pluralité de dispositifs comprenant le dispositif de lecture nomade de médias numériques ;
recevoir, au dispositif serveur de médiation, une demande (508) d'informations de compatibilité du dispositif de lecture nomade de médias numériques, la demande émanant du dispositif de lecture de médias numériques ;
en réponse à la réception de la demande, envoyer (512) les informations de compatibilité du dispositif de lecture nomade de médias numériques, du dispositif serveur de médiation au dispositif de lecture de médias numériques ;
recevoir les informations de compatibilité au dispositif de lecture de médias numériques et configurer (514) le dispositif de lecture de médias numériques conformément aux informations de compatibilité reçues ;
établir ensuite une liaison de communication de données entre le dispositif de lecture de médias numériques et le dispositif de lecture nomade de médias numériques, où les caractéristiques opérationnelles de la liaison de communication de données sont déterminées par les informations de compatibilité ; et
transmettre ensuite le contenu des médias numériques (516) du dispositif de lecture nomade de médias numériques au dispositif de lecture de médias numériques en utilisant la liaison de communication établie et les informations de compatibilité.

2. Procédé selon la revendication 1, comprenant en outre :
recevoir, au dispositif serveur de médiation, des informations de compatibilité révisées du dispositif de lecture nomade de médias numériques ; et
actualiser les informations de compatibilité tenues à jour au dispositif serveur de médiation avec les informations de compatibilité révisées.

3. Procédé selon la revendication 2, comprenant en outre transmettre les informations de compatibilité révisées du dispositif serveur de médiation au dispositif de lecture de médias numériques.

4. Procédé selon la revendication 3, dans lequel le dispositif serveur de médiation pousse les informations de compatibilité révisées au dispositif de lecture de médias numériques.

5. Procédé selon la revendication 1, comprenant en outre maintenir une liaison de communication de données persistante entre le dispositif serveur de médiation et le dispositif de lecture de médias numériques, où la demande d'informations de compatibilité du dispositif de lecture nomade de médias numériques est reçue en utilisant la liaison de communication de données persistante, et où les informations de compatibilité du dispositif de lecture nomade de médias numériques sont envoyées en utilisant la liaison de communication de données persistante.

6. Procédé selon la revendication 1, dans lequel les informations de compatibilité tenues à jour par le dispositif serveur de médiation comprennent des informations sélectionnées parmi le groupe consistant en: informations sur la version matérielle du dispositif de lecture nomade de médias numériques ; informations sur la version logicielle du dispositif de lecture nomade de médias numériques ; informations sur la version du microprogramme du dispositif de lecture nomade de médias numériques ; protocoles de communication de données supportés par le dispositif de lecture nomade de médias numériques ; modes de communication de données supportés par le dispositif de lecture nomade de médias numériques ; canaux de communication de données sans fil supportés par le dispositif de lecture nomade de médias numériques ; fréquences de communication de données sans fil supportées par le dispositif de lecture nomade de médias numériques ; techniques d'authentification exigées par le dispositif de lecture nomade de médias numériques ; techniques de sécurité supportées par le dispositif de lecture nomade de médias numériques ; et techniques de chiffrement supportées par le dispositif de lecture nomade de médias numériques.

7. Serveur de médiation (412) configuré pour être utilisé dans le procédé selon la revendication 1, le procédé étant destiné à coordonner une communication de données entre un dispositif de lecture de médias numérique (404) et un dispositif de lecture nomade de médias numériques (402) qui déplace un contenu de médias numériques en recevant un contenu audio-vidéo dans un premier format, en convertissant le contenu audio-vidéo reçu en un flux de médias codés ayant un format mis en paquets, et en transmettant le flux de médias codés au dispositif de lecture de médias numériques, le serveur de médiation configuré pour :
tenir à jour (504), extraire et accéder des informations de compatibilité associées à des capabilités de communication de données d'une pluralité de dispositifs, la pluralité de dispositifs comprenant le dispositif de lecture nomade de médias numériques ;
recevoir une demande (508) d'informations de compatibilité du dispositif de lecture nomade de médias numériques, la demande émanant du dispositif de lecture de médias numériques ; et
en réponse à la réception de la demande, envoyer (512) les informations de compatibilité du dispositif de lecture nomade de médias numériques, du dispositif serveur de médiation au dispositif de lecture de médias numériques.

8. Dispositif de lecture de médias numériques (404) configuré pour être utilisé dans le procédé selon la revendication 1, le procédé étant destiné à coordonner une communication de données entre un dispositif de lecture de médias numériques (404) et un dispositif de lecture nomade de médias numériques (402) qui déplace un contenu de données numériques en recevant un contenu audio-vidéo dans un premier format, en convertissant le contenu audio-vidéo reçu en un flux de médias codés ayant un format mis en paquets, et en transmettant le flux de médias codés au dispositif de lecture de médias numériques étant configuré pour :
demander et recevoir, d'un serveur de médiation selon la revendication 7, des informations de compatibilité du dispositif de lecture nomade de médias numériques et se configurer conformément aux informations de compatibilité reçues ;
établir ensuite une liaison de communication de données avec le dispositif de lecture nomade de médias numériques, où les caractéristiques opérationnelles de la liaison de communication de données sont déterminées par les informations de compatibilité ; et
recevoir ensuite un contenu de médias numériques (516) du dispositif de lecture nomade de médias numériques en utilisant la liaison de communication de données établie et les informations de compatibilité.
